# EUROPEAN PATENT SPECIFICATION

(11) **EP 4 337 612 B1**
(45) Date of publication and mention of the grant of the patent: **07.05.2025**
(21) Application number: 22719639.1
(22) Date of filing: 30.03.2022
(51) Int. Cl.: C02F 1/28, C02F 1/52, C02F 1/66, C02F 101/16

(54) **METHOD FOR THE PURIFICATION OF WASTE WATER**
VERFAHREN ZUR REINIGUNG VON ABWASSER
PROCEDE DE PURIFICATION DES EAUX USEES

(30) Priority: 10.05.2021 IT 202100011972
(43) Date of publication of application: 20.03.2024
(73) Proprietor: Università Degli Studi Di Ferrara, 44121 Ferrara (IT)
(72) Inventor: COLTORTI, Massimo, 44121 FERRARA (IT); FACCINI, Barbara, 44121 FERRARA (IT); FERRETTI, Giacomo, 44121 FERRARA (IT); GALAMINI, Giulio, 44121 FERRARA (IT)
(74) Representative: Garavelli, Paolo
(86) International application number: PCT/IT2022/050075
(87) International publication number: WO 2022/239038

(56) References cited:
- CN-A- 110 759 581
- JP-B2- 5 360 764
- KR-B1- 100 371 522
- AMINI ADIB ET AL: "Cost-effective treatment of swine wastes through recovery of energy and nutrients", WASTE MANAGEMENT, vol. 69, 31 August 2017 (2017-08-31), pages 508 - 517, XP085215091, ISSN: 0956-053X, DOI: 10.1016/J.WASMAN.2017.08.041

## Description

The present invention refers to a method for the purification of waste water, in particular for the purification of waste water from nitrogen and phosphate through the use of zeolitite.

The use of zeolite is known, both natural zeolite (tuffs rich of zeolite or zeolitite) and synthetic zeolite, for the treatment of wastewater, since their natural capability of performing a cationic exchange allows adsorbing and purifying waters polluted by heavy metals like cesium and strontium, and ammonium (NH₄⁺).

It is known to remove nitrogen (N) and phosphor (P) from wastewater through the precipitation of mineral phases, in particular struvite (MgNH₄PO₄·6H₂O).

Methods for the purification of wastewater are known, which use zeolite and struvite synergistically, for example by providing the use of iron oxide (FeOOH) associated with polymeric substances and zeolite (clinoptilolite) to concentrate ammonium (NH₄⁺) and phosphor (PO₄³⁻) from human wastewater and induce the precipitation of struvite using magnesium chloride (MgCl₂) and sodium hydroxide (NaOH) as buffer for the pH.

A method is further known (patent CN108218571) for the purification of wastewater which provides for the precipitation of struvite from digestates and only afterwards the addition of zeolite (clinoptilolite).

These known methods however have the problem of strongly modify the characteristics of wastewater.

These known methods further have the problem of not allowing an optimum lowering of ammonium (NH₄⁺) in wastewater.

Some known methods then have the problem that, using sodium hydroxide (NaOH) as base, they add to wastewater Na⁺, notoriously harmful for cultures.

Finally, some known methods, for example a method disclosed in document CN108218571, have the problem that, using magnesium chloride (MgCl₂) as source of magnesium (Mg²⁺), the add chloride ions (Cl⁻) to wastewater.

Further methods known in the art are disclosed in JP 5 360764 B2, CN 110 759 581 A, KR 100 371 522 B1 and AMINI ADIB ET AL: "Cost-effective treatment of swine wastes through recovery of energy and nutrients",WASTE MANAGEMENT, vol. 69, 31 August 2017 (2017-08-31), pages 508-517.

Object of the present invention is providing a method for the purification of waste water from nitrogen (N) and phosphor (P), which allows an optimum reduction of ammonium (NH₄⁺) reducing the amount of necessary reagents, decreasing costs and less modifying the characteristics of wastewater.

The above and other objects and advantages of the invention, as will appear from the following description, are obtained with a method for the purification of waste water as claimed in Claim 1, Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by a preferred embodiment thereof, provided as a non-limiting example, with reference to the enclosed drawings, in which:
- Figure 1 shows the X-Ray Diffraction (XRD) of the precipitate obtained with a step of the method for the purification of waste water of the invention;
- Figure 2 shows an image obtained through electronic scanning microscope (ESEM) of the precipitates obtained after a step of the method for the purification of waste water of the invention.

The method for the purification of waste water according to the invention comprises a preliminary step, a first and a second different working steps, described in detail below.

The preliminary step is provided to determine the amount of zeolitite necessary for abating the amount of ammonium NH₄⁺ in wastewater to a pre-determined concentration value C_{e target}. This value depends on the discharge that has to be obtained. The concentration of NH₄⁺ obtained through the application of zeolitite will determine the amount of reagents to be used afterwards. The necessary amount of zeolitite is obtained by the adsorption isotherm which describes the balance condition between retention and release of NH₄⁺ from the surface of a solid phase; preferably, the adsorption isotherm is determined experimentally through a series of tests wherein different masses of zeolitite are added to constant volumes of wastewater, to be then able to evaluate the amount of NH₄⁺ adsorbed per gram of zeolitite (adsorption capability) as function of the finale concentration in wastewater. The necessary amount of zeolitite depends on the applied type of zeolitite and on Cₑ target.

The first step of adsorbing NH₄⁺ through the use of zeolitite comprises:
- a first sub-step of addition of the amount of zeolitite determined in the preliminary step to wastewater and of mixing the wastewater through mixing means, using the due arrangements to avoid as much as possible the exolution of gaseous ammonia and the consequent loss of nitrogen (moderate mixing speed, airtight closure of the container or other). Mixing occurs for a global time of at least 2.5/3 hours in order to keep the zeolitite in suspension and reach a balance condition;
- a second sub-step of separating the solid fraction from the liquid fraction.

Herein below, a laboratory test is described, in which the first step has been performed.

The test has been performed in 4 replicates. Zeolitite has been mixed to wastewater in a m/m ratio of about 25%. The samples have been mixed with an orbital stirrer for 3 hours at 150 rpm. Solids have then been separated from the liquid fraction through centrifugation. An aliquot of digestate has been taken from each replicate and immediately subjected to Kjeldhal analysis to measure the content of NH₄⁺ post-treatment and verify whether the concentration C_{e target} of NH₄⁺ had been reached. Another aliquot of digestate has been stocked in specimens and stored in a freezer for the following measures through mass spectrometry with inductively coupled plasma (ICP-MS) and liquid ion-chromatography (LIC). The remaining liquid fraction has been used in the following steps of the treatment. Zeolitite has been repeatedly washed with H₂O till an EC has been obtained which is less than 0.5 mS/cm. The samples have been dried in a heater at low temperature (65°C, to avoid the volatilization of nitrogen) for 40 hours. The dried samples have been ground and analyzed with an elemental analyzer coupled with an isotopic mass spectrometer (EA-IRMS) for N and C total and isotopes, and with an electronic scanning microscope (ESEM).

The second step of precipitation of struvite comprises:
- a first sub-step of checking the concentration of NH₄⁺ in wastewater treated with zeolitite, which is periodically measured upstream and downstream of the precipitation to compute with better accuracy the amount of necessary reagents and verify the decrease of NH₄⁺ in wastewater,
- a second sub-step of computing the amount of reagents to be added to wastewater, depending on the amount of NH₄⁺ detected in the first sub-step, necessary to arrive, at the end of the first step, to a concentration in wastewater with a molar ratio of 1.0:1.5:1.0 (Mg:NH₄:PO₄), namely keeping an excess condition of NH₄⁺ in wastewater,
- a third sub-step of simultaneous addition to wastewater of reagents, previously dissolved in water, to increase the concentration of PO₄³⁻ and Mg²⁺ in wastewater to a molar ratio of 1.0:1.5:1.0 (Mg:NH₄:PO₄). In particular, the following reagents are used: anhydrous dibasic potassium phosphate K₂HPO₄ and hepta-hydrate magnesium sulphate MgSO₄·7H₂O.

The amounts of added reagents depend on the amount of nitrogen that has to be subtracted from wastewater.
- a fourth sub-step of addition to wastewater of a base (KOH) to buffer the pH to 9;
- a fifth sub-step of separation of the struvite, precipitated immediately after the addition of reagents to wastewater.

Herein below a laboratory test is described, in which the second step has been performed. The test has been performed in 4 replicates. Anhydrous dibasic potassium phosphate K₂HPO₄ and hepta-hydrate magnesium sulphate MgSO₄·7H₂O have been added in accurate amounts, computed depending on the global amount of NH₄⁺ dissolved in the volume of wastewater (moles) present after the first step. The weight of applied reagents is such that a molar ratio equal to 1.0:1.5:1.0 (Mg:NH₄⁺:PO₄) is reached, therefore under conditions of excess of NH₄⁺.

Both reagents have been previously dissolved in H₂O. KOH 30% m/v has then been added to take the pH to 9.

Struvite has been separated through centrifugation. An aliquot of wastewater has been stocked in specimens and stored in a freezer at -4°C for the following measures through mass spectrometry with inductively coupled plasma (ICP-MS) and liquid ion-chromatography (LIC). The clear precipitates on the bottom have been taken and washed repeatedly with H₂O till an EC is obtained which is less than 0.5 mS/cm. The samples have then been dried in a heater at 35°C for 40 hours. It has been dried at low temperature to avoid nitrogen losses and to limit as much as possible the thermal decomposition of struvite. The dried samples have been ground with a glass wand and analyzed with an elemental analyzer coupled with a isotopic mass spectrometer (EA-IRMS) for N and C elemental and isotopes, X-Ray Diffraction (XRD) for the mineralogical and crystallographic characterization and with an electronic scanning microscope (ESEM).

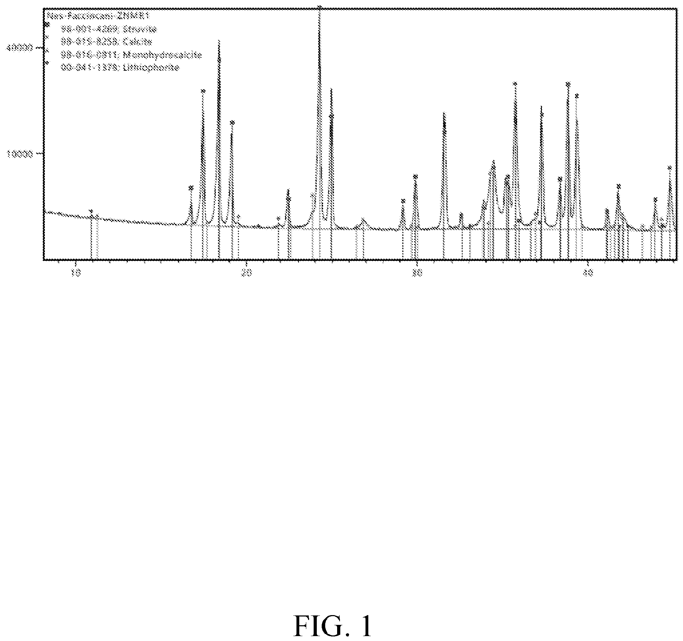

Figure 1 shows the X-Ray Diffraction (XRD) of the precipitate obtained with the second step; the mineralogical composition and the amount expressed in percentage correspond to: struvite (MgNH₄PO₄·6H₂O) 89.9%, calcite (CaCO₃) 7.5%, mono-hydrocalcite (CaCO₃·H₂O) 2.1%, litioforite ((Al,Li)MnO₂(OH)₂) 0.4%.

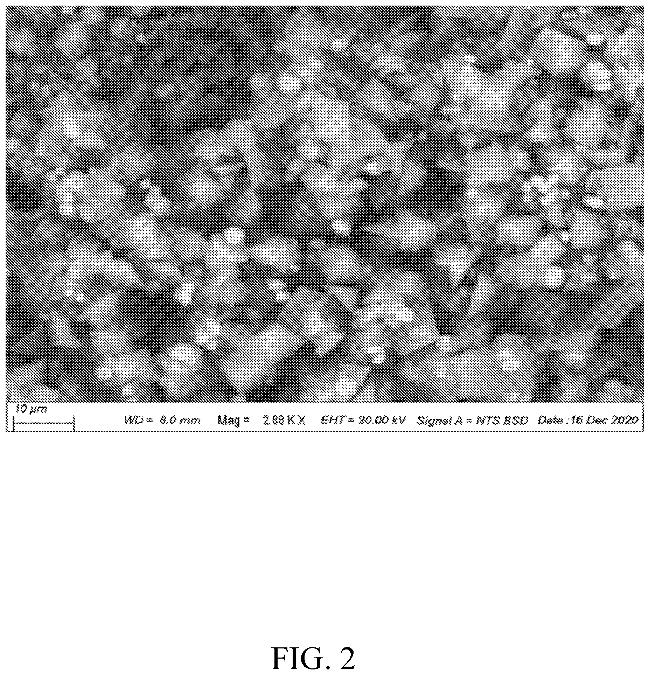

Figure 2 shows an image obtained through electronic scanning microscope (ESEM) of the precipitates obtained after the second step, separated from wastewater and washed with H₂O MQ. Crystals with a prismatic shape are mainly struvite, while crystals with spherical shape and very clear are probably crystals of calcite.

The physical-chemical characteristics of zeolitite and its mineralogical composition are described below.

Zeolitite used in the method for the purification of waste water of the invention is particularly rich of chabazite. It has a fine granulometry, on the order of micron. Its granulometric distribution is as follows: 0.4% between 250 and 125 µm (fine sand), 2.8% between 125 and 62.5 µm (very fine sand), 75.6% between 62.5 and 3.9 µm (silt), and 21.2% less than 3.9 µm (clay).

After the first step, zeolitite has been subjected to EA-IRMS analysis to quantify the total N and C; from the results it appeared that: N = 0.43 ± 0.02%; C = 0.32 ± 0.07%.

After the second step, the precipitate has been subjected to XRD analysis, and the mineralogical composition corresponds to: struvite (MgNH₄PO₄·6H₂O) 89.9%, calcite (CaCO₃) 7.5%, mono-hydrocalcite (CaCO₃·H₂O) 2.1% and litioforite ((Al,Li)MnO₂(OH)₂) 0.4% (Figure 1).

The precipitate has also been subjected to EA-IRMS analysis for the quantification of total N and C; from the results, it appeared that: N = 3.51 ± 0.06%; C = 3.94 ± 0.41%.

The method for the purification of waste water of the invention provides for the use of reagents dissolved in water (second step).

The concentration of ammonia nitrogen (NH₄⁺-N) of wastewater has been measured in three different time points, namely in the initial wastewater, after the first step (post-treatment with zeolitite) and after the second step (post-precipitation of struvite).

NH₄⁺-N has been measured through direct distillations by means of the Kjeldhal method.

The results, expressed in mg L⁻¹, are: 2555 ± 26 in the initial wastewater, 1484 ± 15 after the addition of zeolitite and 489 ± 12 post-precipitation of struvite. NH₄⁺-N has then been reduced by 41.7% with the zeolite treatment and by a further 39.1% with the precipitation of struvite, for a global reduction of 80.9 %.

The method for the purification of waste water of the invention has the following advantages:
- by providing for the use of zeolitite upstream of the precipitation, it allows reducing the concentration of NH₄⁺ to more useful values for the precipitation of struvite, in order to reduce the amount of necessary reagents, potentially decreasing the costs and less modifying the wastewater characteristics;
- the addition of zeolitite in the initial step allows reaching, with the precipitation of struvite, highly better abatements of NH₄⁺, with respect to the induction of the precipitation directly in the initial wastewater. Also as regards this observation, a laboratory test has been performed, inducing the precipitation of struvite directly from the initial wastewater, without firstly subjecting it to mixing with zeolitite, bringing about the same molar ration equal to 1.0:1.5:1.0 (Mg:NH4+:PO4) through the addition of anhydrous dibasic potassium phosphate (K₂HPO₄) and hepta-hydrate magnesium sulphate (MgSO₄·7H₂O). It has been observer that the final abatement of NH₄⁺ in the treatment providing for the use of zeolitite has been equal to about 80.9% with respect to 67.2% obtained without the use of zeolitite; zeolitite has therefore allowed highly greater abatements of NH₄⁺;

- not using NaOH as base, it is avoided to add to wastewater Na⁺, which is known to be harmful for cultures;
- not using magnesium chloride MgCl₂ as source of Mg²⁺, it is avoided to add Cl⁻ ions to wastewater;
- differently from known methods which use, in the majority of cases, clinoptilolite as zeolite, in a preferred embodiment of the method of the invention, a zeolitite is instead used which is rich of chabazite, which has its theoretical exchange capability (CEC), known to be greater with respect to clinoptilolite, and therefore, with the same zeolite content, is more efficient in the removal of NH₄⁺; the method of purification of waste water of the invention can also be performed by using other types of zeolitite.

## Claims

1. Method for purifying waste water comprising the following steps:
- a preliminary step designed to determine an amount of zeolitite necessary to abate an amount of ammonium NH4+ in wastewater to a pre-determined concentration value (C_{e target}), wherein an adsorption isotherm is determined which describes a balance condition between retention and release of NH4+ from a surface of a solid phase, the adsorption isotherm being determined experimentally through a series of tests in which different masses of zeolitite are added to a constant volume of wastewater;
- a first step of adsorption of NH4+ through the use of zeolitite which comprises:
a first sub-step of addition to wastewater of the amount of zeolitite determined in the preliminary step, and of mixing the wastewater through mixing means in oder to keep the zeolitite in suspension,
a second sub-step of separating a solid fraction from a liquid fraction,
- a second step of precipitating struvite which comprises:
a first sub-step of checking the concentration of NH4+ in wastewater treated with zeolitite,
a second sub-step of computing the amount of reagents to be added to wastewater, depending on the amount of NH4+ detected in the first sub-step, necessary to arrive to a concentration in wastewater with a molar ratio of 1.0:1.5:1.0 (Mg:NH4:PO4),
a third sub-step of simultaneous addition to wastewater of the following reagents previously dissolved in water: anhydrous dibasic potassium phosphate K2HPO4 and hepta-hydrate magnesium sulphate MgSO4·7H2O,
a fourth sub-step of addition to wastewater of a solution of potassium hydroxide KOH to buffer the pH to 9,
a fifth sub-step of separation of the struvite, precipitated after the addition of reagents to wastewater.

2. Method for purifying waste water according to claim 1, **characterized in that**, in the first sub-step of the second step, the concentration of NH4+ in wastewater treated with zeolitite is periodically measured upstream and downstream of the precipitation.

3. Method for purifying waste water according to claim 1, **characterized in that** the mass of necessary zeolitite is computed depending on the chosen concentration (C_{e target}) to which one must arrive through the use of zeolitite and the preliminary definition of the adsorption isotherm.

4. Method for purifying waste water according to claim 1, **characterized in that** both reagents have been separately dissolved in an amount of water before adding them to wastewater.

## Patentansprüche

1. Abwasserreinigungsverfahren mit folgenden Schritten:
- eine Vorphase zur Bestimmung der Menge an Zeolith, die erforderlich ist, um die Menge an Ammonium NH₄⁺ im Abwasser bei einem vorgegebenen Konzentrationswert (C_{e target}) zu reduzieren, in der die Adsorptionsisotherme bestimmt wird, die den Gleichgewichtszustand zwischen Retention und Freisetzung von NH₄⁺ beschreibt von der Oberfläche einer festen Phase, wobei die Adsorptionsisotherme experimentell durch eine Reihe von Tests bestimmt wird, bei denen unterschiedliche Massen Zeolith zu einem konstanten Volumen hinzugefügt werden Abwasser;
- eine erste Phase der Adsorption von NH₄⁺ durch die Verwendung von Zeolith, die Folgendes umfasst:
eine erste Teilphase der Zugabe der in der Vorphase ermittelten Zeolithmenge zum Abwasser und der Durchmischung des Abwassers mittels Mischmitteln, um den Zeolith in der Schwebe zu halten,
eine zweite Unterphase der Trennung der festen Fraktion von der flüssigen Fraktion,
- eine zweite Struvit-Ausfällungsphase, die Folgendes umfasst:
eine erste Unterphase zur Kontrolle der NH₄⁺ -Konzentration im mit Zeolith behandelten Abwasser,
eine zweite Unterphase zur Berechnung der Menge an Reagenzien, die dem Abwasser zugesetzt werden sollen, basierend auf der in der ersten Unterphase nachgewiesenen Menge an NH₄⁺, die erforderlich ist, um im Abwasser eine Konzentration im Molverhältnis von 1,0:1,5:1,0 zu erreichen (Mg:NH₄:PO₄),
eine dritte Unterphase der gleichzeitigen Zugabe der folgenden zuvor in Wasser gelösten Reagenzien zum Abwasser: wasserfreies dibasisches Kaliumphosphat K₂HPO₄ und Magnesiumsulfat-Heptahydrat MgSO₄·7H₂O,
eine vierte Unterphase der Zugabe einer KOH-Kaliumhydroxidlösung zum Abwasser, um den pH-Wert auf 9 zu puffern,
eine fünfte Unterphase der Abtrennung des Struvits, das nach der Zugabe der Reagenzien zum Abwasser ausgefällt wird.

2. Abwasserreinigungsverfahren nach Anspruch 1, **dadurch gekennzeichnet, dass** in der ersten Teilphase der zweiten Phase die Konzentration von NH₄⁺ im mit Zeolith behandelten Abwasser vor und nach der Fällung periodisch gemessen wird.

3. Verfahren zur Abwasserreinigung nach Anspruch 1, **dadurch gekennzeichnet, dass** die erforderliche Masse an Zeolith auf Basis der gewählten Konzentration (C_{e target}), die durch den Einsatz von Zeolith erreicht werden soll, und der vorläufigen Festlegung der Menge berechnet wird Adsorptionsisotherme.

4. Abwasserreinigungsverfahren nach Anspruch 1, **dadurch gekennzeichnet, dass** beide Reagenzien vor der Zugabe zum Abwasser getrennt in einer Wassermenge gelöst werden.

## Revendications

1. Procédé d'épuration des eaux usées comprenant les étapes suivantes :
- une phase préliminaire prévue pour déterminer la quantité de zéolite nécessaire pour réduire la quantité d'ammonium NH₄⁺ dans les eaux usées à une valeur de concentration prédéterminée (cible Ce), dans laquelle est déterminée l'isotherme d'adsorption qui décrit la condition d'équilibre entre rétention et libération de NH₄⁺ à partir de la surface d'une phase solide, l'isotherme d'adsorption étant déterminée expérimentalement par une série d'essais dans lesquels différentes masses de zéolithe sont ajoutées à un volume constant de eaux usées:
- une première phase d'adsorption de NH₄⁺ grâce à l'utilisation de zéolite qui comprend:
une première sous-phase d'ajout de la quantité de zéolithe déterminée lors de la phase préliminaire aux eaux usées et de mélange des eaux usées à l'aide de moyens de mélange de manière à maintenir la zéolithe en suspension,
une deuxième sous-phase de séparation de la fraction solide de la fraction liquide,
- une deuxième phase de précipitation de struvite qui comprend:
une première sous-phase de contrôle de la concentration en NH₄⁺ dans les eaux usées traitées à la zéolite,
une deuxième sous-phase pour calculer la quantité de réactifs à ajouter aux eaux usées, basée sur la quantité de NH₄⁺ détectée dans la première sous-phase, nécessaire pour atteindre une concentration dans les eaux usées d'un rapport molaire de 1,0:1,5:1,0 (Mg:NH₄:PO₄),
une troisième sous-phase d'ajout simultané aux eaux usées des réactifs suivants préalablement dissous dans l'eau: phosphate dibasique de potassium anhydre K₂HPO₄ et sulfate de magnésium heptahydraté MgSO₄.7H₂O,
une quatrième sous-phase d'ajout d'une solution de potasse KOH aux eaux usées pour tamponner le pH à 9,
une cinquième sous-phase de séparation de la struvite, précipitée après l'ajout des réactifs aux eaux usées.

2. Procédé d'épuration des eaux usées selon la revendication 1, **caractérisé en ce que**, dans la première sous-phase de la deuxième phase, la concentration en NH₄⁺ dans les eaux usées traitées à la zéolithe est mesurée périodiquement en amont et en aval de la précipitation.

3. Procédé d'épuration des eaux usées selon la revendication 1, **caractérisé par le fait que** la masse de zéolitite nécessaire est calculée sur la base de la concentration choisie (C_{e target}) que l'on souhaite atteindre grâce à l'utilisation de zéolitite et à la définition préalable de la isotherme d'adsorption.

4. Procédé d'épuration des eaux usées selon la revendication 1, **caractérisé en ce que** les deux réactifs ont été dissous séparément dans une quantité d'eau avant de les ajouter aux eaux usées.
